# EUROPEAN PATENT APPLICATION

(11) **EP 4 220 476 A1**
(43) Date of publication of application: **02.08.2023**
(21) Application number: 22305109.5
(22) Date of filing: 31.01.2022
(51) Int. Cl.: G06K 7/10, G06Q 10/08, H01Q 1/22, H01Q 3/02

(54) **COMPACT AUTONOMOUS UHF RFID SYSTEM FOR PERMANENT INVENTORY**

(71) Applicant: Quadient Technologies France, 92220 Bagneux (FR)
(72) Inventor: VENTURE, Guy, 13560 SENAS (FR)
(74) Representative: Cabinet Beau de Loménie

(57) **Abstract**

A UHF RFID system used in a closed volume comprising: a UHF antenna set (404, 406, 408, 410) including at least one flat UHF antenna (404, 406, 408, 410), a support (402) for the UHF antenna set, and a first axle (418) holding the support, the UHF antenna set being configured to rotate around a first axis (426) forming an axis of symmetry for the first axle and driven by a first electrical motor (422), the UHF RFID system being configured for the UHF antenna set to provide a tridimensional scanning coverage around the UHF RFID system and to generate a shifting pattern of UHF intensity peaks within the closed volume.

## Description

### FIELD OF THE INVENTION

The present invention relates to the field of storage and inventory of various objects in general stores, workshops or other places of storage and more particularly to UHF radiofrequency identification data (RFID) systems designed for identifying and tracking of items.

### PRIOR ART - BACKGROUND OF THE INVENTION

Knowing which and how many articles are stored, in particular in the case of closed warehouses or storage containers, is essential for operating a business. Articles present in a stock could in principle be derived from inflows and outflows. However, in practice, deviations are routine due to human errors such as articles placed in the wrong place, picking errors, WMS (Warehouse Management System) recording errors or lost articles, or due to other factors such as theft. Often, WMS tools are not fully operational or even non-existing. Therefore, an inventory, which is a process of identifying, counting and valuing articles present in a site or in a company, is typically regularly required. A permanent inventory performed continuously or very regularly can be most valuable for a business for optimizing its logistics and accounting.

Today's business practices also often require that tools be traced in production and maintenance environments. Generally, an identification data (ID) device attached to each tool is required. For productivity purposes, such an ID device needs to be read remotely and automatically by electronic readers. Automation reduces errors in information capture and allows for more accurate and more regular inventory management. This requires ID devices, which can communicate. Tool cabinets or containers equipped with tracing systems are typically used for example for maintenance staff. Tools tracing is beneficial not only for inventory purpose of the tools, but also for ensuring that tools required for a particular maintenance intervention are effectively in the tool cabinet and have not been left in the field, thus preventing from damages of foreign objects (for example a tool left in a turbine). Such tracing can be useful for multiple equipment such as consumables required for operating a site or protection equipment required for site personnel.

Radio frequency identification (RFID) is a preferred solution as radiofrequency communication allows a diffuse transmission and is tolerant to radiofrequency ID devices being hidden, as opposed to optical solutions, which are more directional and quite intolerant to blocking bodies lying in the transmission path. The use of RFID tags is an efficient and economical method for systems for tracking and tracing items within an organization. Producers can check the location of items, in real time, by remotely accessing the data being transmitted by RFID tags attached to those items. Therefore, RFID tags are widely used for the identification and the tracking of items, particularly for items in a shop or a warehouse environment.

In principle, either LF/HF RFID or UHF RFID technologies could be used. However, UHF RFID technology is a preferred solution because of the following issues inherent to LF/HF RFID technology. LF/HF inductive loop antennas are heavier and more expensive than UHF antennas, and do not work properly on or near conductive surfaces (both for the RFID tag and the UHF RFID reader). The reading distance for LF/HF RFID technology is typically limited to 1 meter, which makes it inappropriate for scanning larger volume. LF/HF RFID technology requires additional magnetic spacer or coating (such as ferrite) to canalize the magnetic field, which implies a complex and expensive implementation.

A standard UHF RFID system comprises a reader connected to at least one antenna, and detects RFID tags within the volume covered by the radiative electromagnetic (EM) field generated by the system antennas. Closed volume such as warehouses or storage containers always contain some metallic equipment or elements, such as metallic racks or shelving, which create some reflections for the EM waves generated by the UHF RFID system. As a result of these reflections, a stationary wave regime is established within the closed volume. When the volume is closed by metallic walls and ceiling, such as for metallic cabinets or metallic containers, EM waves are reflected on the wall and the reflections participate in the establishment of the stationary wave regime. Metallic wire mesh can also be used within the walls and ceiling for preventing the radiative electromagnetic (EM) field generated by the UHF RFID system antennas from propagating outside the closed volume and eventually erroneously reading RFID tags located outside the closed volume. Here also EM waves are reflected on the metallic wire mesh and the reflections participate in the establishment of the stationary wave regime.

The establishment of stationary waves results in a static electromagnetic (EM) field profile including peaks and valleys (i.e. nodes). Such an EM field profile is not appropriate for communicating with RFID tags as RFID tags positioned near a node would be unlikely to be detected in general. UHF RFID wavelength bands are limited in Europe to a narrow band 866-869 MHz and in USA to a narrow band 902-928MHz. As a result, it is not possible to vary the UHF frequency so as to displace significantly the nodes spatial positions, and the cost associated to frequency shifting would anyway be significant. Therefore, the establishment of static stationary waves within metallic cabinets is a recurring concern for detecting RFID tags within closed volumes equipped with UHF RFID systems such as warehouses or storage containers.

Generally, UHF RFID systems are relatively directive and have a main lobe of radiation with an emission angle, or Half Power Beam Width, between 40 degrees and 60 degrees at 50 percent of maximum intensity (or between the half power points of the main lobe as measured at -3dB), and their reach for reading RFID tags is typically limited to a few meters. A fixed UHF RFID antenna is particularly effective for monitoring a localized volume. But, when a large volume is required to be monitored, the number of fixed UHF RFID antennas must be multiplied, resulting in a complicated, extended and more costly system. Larger, more powerful antennas may also be used, but are both costly and heavy energy consumers. So, there is a need for a light and compact UHF RFID system, which could be used for monitoring closed volumes such as warehouses or storage containers.

Although UHF radiations can go through most materials and are therefore very appropriate for monitoring storage volumes, in addition to metallic surfaces, which reflect UHF radiations, liquids are efficient absorbents of UHF radiations and can also be the cause of masking RFID tags. The storage of liquid containers or of metallic packaging such as for coffee for example is often a concern for inventory by RFID systems. So, any improvement regarding the masking issue provided by a new UHF RFID system would be welcome.

### OBJECT AND DEFINITION OF THE INVENTION

It is an object of the present invention to at least substantially overcome or ameliorate at least one or more of the disadvantages described above. This object is achieved by providing a UHF RFID system as part of a permanent inventory system used in a closed volume such as a warehouse or a storage container, comprising: a UHF antenna set including at least one flat UHF antenna, a support for the UHF antenna set, and a first axle holding the support, characterized in that the UHF antenna set is configured to rotate around a first axis forming an axis of symmetry for the first axle and driven by a first electrical motor, wherein the UHF RFID system is configured for the UHF antenna set to provide a tridimensional scanning coverage around the UHF RFID system and to generate a shifting pattern of UHF intensity peaks within the closed volume allowing any RFID tag within the closed volume to be reached by a UHF intensity peak without having to multiply the number of UHF antennas. Also, the constant change of emission directions and of reflection significantly lowers the risk of masking.

In an embodiment, the UHF antenna set is constituted of N flat UHF antennas radiating in N emission directions, wherein each flat UHF antenna of the N flat UHF antennas is configured to radiate in an emission direction of the N emission, wherein the emission direction is perpendicular to a largest exterior surface of the each flat UHF antenna and the emission direction is orientated at an angle of 90/N+k.180/N degrees with respect to the first axis with k having a value from 0 to N-1. Therefore, the N flat UHF antennas can be distributed anywhere on a surface of the support.

According to a feature of the invention, each flat UHF antenna has an emission angle equal of above 180/N degrees, allowing for an overlap of emissions of the N flat UHF antennas and a full scanning coverage around the UHF RFID system.

According to another feature of the invention, the first axis is vertical, and the support is designed so that a moment of inertia of the support and of a content of the support with respect to the first axis is situated on the first axis in order to facilitate for a smooth rotation of the support and the content.

In a particular embodiment, the support includes sections of a regular octagonal cylinder constituted of four side, and the UHF antenna set is constituted of four UHF antennas wherein a UHF antenna is attached in a center of a side face and two UHF antennas of the four UHF antennas are attached onto two contiguous side faces.

Advantageously, the support is a regular octagonal cylinder constituted of eight side faces and of two octagonal surfaces joining the eight side faces, and the UHF antenna set is constituted of four UHF antennas wherein the four UHF antennas are attached onto four contiguous side faces so that the emission directions of the four UHF antennas are distributed every 45 degrees and are pointing within a same vertical half plane limited by the first axis.

In another embodiment, the support comprises an external cylindrical surface holding the UHF antenna set constituted of four UHF antennas wherein the support comprises a top circular surface and a bottom circular surface, and the external cylindrical surface joins the top circular surface and the bottom circular surface.

Advantageously, the first axle connects a center of the top circular surface with the first electrical motor.

Preferably, the first axle is oriented perpendicularly to the top circular surface. When the height of the external cylindrical surface is limited, the UHF RFID system can be very compact.

According to a feature of the invention, a first UHF antenna of the UHF antenna set is attached onto the external top circular surface, a second UHF antenna of the UHF antenna set is attached onto the external cylindrical surface, a third UHF antenna is attached onto the external bottom circular surface, and a fourth UHF antenna is attached onto the external cylindrical surface.

Preferably, the first UHF antenna is attached in the center of the external top circular surface, the second UHF antenna is centered onto a horizontal median plane of the external cylindrical surface, the third UHF antenna is in the center of the external bottom circular surface, and the fourth UHF antenna is centered onto the horizontal median plane.

Advantageously, the emission angle of the UHF antennas is 60 degrees allowing for a substantial overlap for the emissions of the UHF antennas.

In a preferred embodiment, the first axle and a first electrical motor are held by a fork comprising a horizontal beam and two vertical arms on each side of the horizontal beam holding the two vertical arms, and a vertical axle connecting the fork with a second electrical motor. The fork allows for the support to rotate between two vertical arms of the fork.

Advantageously, the vertical axle is perpendicular to the horizontal beam, and the first axle is a horizontal axle crossing the support or consists in two aligned horizontal axles holding the support by two symmetric sides of the support.

Preferably, the second electrical motor is configured for rotating the fork around a second axis forming a symmetry axis for the vertical axle.

According to a feature of the invention, the vertical axle is attached to a center of the horizontal beam and the UHF RFID system is configured for the second axis to be a symmetry axis for the fork and a symmetry axis for the support. The fork, the first axle, the vertical axle, and the support are equally positioned around the second axis in order therefore facilitating a smooth rotation of the fork and the support around the second axis.

In a particular embodiment, the UHF antenna set is a single UHF antenna.

In another embodiment, the support is a sphere and the UHF antenna set is constituted of N flat UHF antennas radiating in N emission directions and comprising at least two UHF antennas. Therefore, for scanning all the space around the UHF RFID system, the extent of the rotations of the first and second electrical motors can be greatly limited.

According to another feature of the invention, the UHF RFID antenna is electrically connected to a UHF RFID reader and the UHF RFID reader is connected to a processor controlling the UHF RFID reader and managing data provided by the UHF RFID reader.

In a particular embodiment, the processor manages communication with an external system and controls a WIFI module, which allows for wireless communication.

Preferably, a battery is configured to power the processor, the WIFI module and the RFID reader, and therefore allows for an autonomous operation of the UHF RFID system without necessity for connecting to an electrical supply.

Advantageously, the processor controls at least the first electrical motor and the step-by-step rotation of the support so that a stationary waves regime can be established each time the rotation stops.

According to a feature of the invention, the UHF RFID reader is configured for operating the UHF antenna set in a multiplexed architecture.

According to another feature of the invention, the UHF RFID system is configured for limiting rotations of at least the first electrical motor and for selecting the UHF antennas energized by the UHF RFID reader so that the scanning is limited to a determined scanning zone. Such limitation to a determined zone can prevent from a UHF scanning through a ceiling and eventually erroneously reading RFID tags located outside the closed volume to be monitored.

In a particular embodiment, the RFID reader is included in the support, next to the UHF antenna set, in order to ensure for an optimized communication between the RFID reader and the UHF antenna.

In another embodiment, the battery, the processor, the WIFI module and the RFID reader are included in the support.

In a preferred embodiment, the UHF RFID system is attached to a ceiling of the closed volume in a central part of the ceiling in order to minimize obstructing movements within the closed volume.

Advantageously, walls, floor and ceiling of the closed volume are metallic or covered by a metallic surfaces or comprise a metallic wire mesh so as to prevent UHF radiations from propagating outside the closed volume, and to reflect UHF radiations and participate in establishing a stationary wave regime.

In another embodiment, UHF RFID system is attached onto a tripod corresponding to mobile usages and/or temporary usages, and the UHF RFID system is configured for an autonomous operation with a battery and a WIFI module.

According to a feature of the invention, the UHF antenna set is attached onto an exterior surface of the support.

Preferably, the first axis forms an axis of symmetry for the support in order to facilitate for a smooth rotation of the support and the content.

According to another feature of the invention, the UHF antenna set is included within the support and covering the UHF antennas is covered by a material of the support being transparent to UHF radiation.

The invention also concerns a method for performing a permanent inventory using a UHF RFID system of claim 1 below, the method comprising: determining a scanning zone, moving the set of UHF antenna to a position for performing a scan in a vertical half plane, performing a scan in a vertical half plane.

The method further comprises: storing in the UHF RFID system data corresponding to responses from RFID tags located in the closed volume, transmitting the data to an external system, clearing the data stored in the UHF RFID system after transmission to the external system, and checking, after a pre-defined delay, whether the permanent inventory must stop or must continue.

In a particular embodiment the method corresponding to a UHF RFID system with a single first axle, the scanning zone is determined by defining a range of angles of rotation for the first axle and by selecting UHF antennas to be energized by the UHF RFID reader.

Preferably, the scanning zone is determined by defining a range of angles of rotation for the first axle and by selecting UHF antennas to be energized by the UHF RFID reader.

Advantageously, the set of UHF antenna is moved to the position by rotating the first axle, and the scan is performed by successively energizing the UHF antennas according to the determined scanning zone, where each UHF antenna is energized for a duration sufficient for a stationary waves regime to be established.

In another embodiment the method corresponding to a UHF RFID system with the first axle and a vertical axle, the scanning zone is determined by defining a first range of horizontal angles of rotation for a vertical axle, and, corresponding to each horizontal angle value within the first range of angles, defining a range of vertical angles of rotation for the first axle.

Preferably, the set of UHF antenna is moved to the position by rotating the first axle and the vertical axle.

Advantageously, the scan is performed by continuously energizing the UHF antenna and by rotating step by step the first axle according to the defined range of vertical angles of rotation, and by maintaining immobile the UHF antenna, for each step, for a duration sufficient for a stationary waves regime to be established.

### BRIEF DESCRIPTION OF THE DRAWINGS

Other aspects, features and advantages of the teachings of the invention will become clearer to those ordinary skilled in the art upon review of the following description in conjunction with the accompanying drawings where:
Figure 1 illustrates an embodiment of a UHF RFID system of the invention, which can be used in a closed volume;
Figure 2 illustrates a scanning of the half plane by a set of UHF antennas of a UHF RFID system of the invention;
Figure 3 illustrates a volume scanned by a UHF RFID system of the invention;
Figure 3A illustrates a first octagonal type support with only half of the regular octagonal cylinder;
Figure 3B illustrates a second octagonal type support of the invention;
Figure 3C illustrates a third octagonal type support of the invention;
Figure 4 illustrates another embodiment of a more compact UHF RFID system of the invention with an optimized support;
Figure 5 illustrates a scanning by a set of UHF antennas attached onto a circular cylinder for a UHF RFID system of the invention;
Figure 6 illustrates preferred embodiment of a UHF RFID system of the invention;
Figure 7 illustrates an implementation of a UHF RFID system located in a chamber;
Figure 8 illustrates a UHF RFID system of the invention attached onto a tripod and located in a chamber; and
Figure 9 illustrates a process using the UHF RFID system according to the invention for performing a permanent inventory in a chamber.

### DETAILLED DESCRIPTION

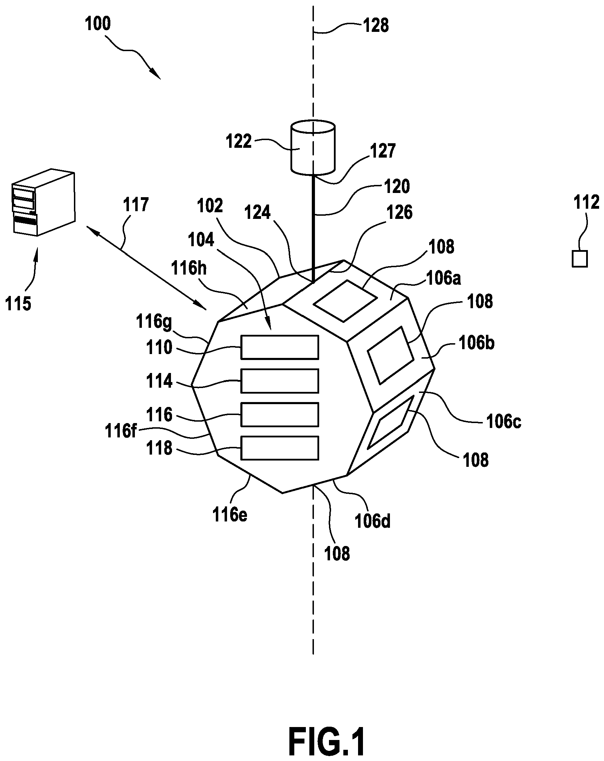

Figure 1 illustrates an embodiment of a UHF RFID system 100 of the invention, which can be used in a closed volume such as a warehouse or a storage container as part of an inventory system. The UHF RFID system comprises an octagonal support 102 in the form of a regular octagonal cylinder constituted of two octagonal surfaces 104 and of eight side faces 106a, 106b, 106c, 106d, 106e, 106e 106f, 106g and 106h. Each of four UHF antennas 108 is attached in the center of each surface of four contiguous side faces 106a, 106b, 106c and 106d of the regular octagonal cylinder. Each UHF RFID antenna is electrically connected to a unique UHF RFID reader 110. Conveniently, the UHF RFID reader operates with four antenna ports and can operate the four UHF antennas. The signal received by the UHF RFID antenna from a passive RFID tag 112 located in the closed volume to be monitored is transferred to and processed by the UHF RFID reader. In the preferred case of passive RFID tags, the UHF RFID reader generates a UHF signal, which energizes the UHF RFID antenna. The UHF radiation generated by the UHF RFID antenna energizes the RFID tag, which provides a response. Then, the response from the RFID tag is collected by UHF RFID antenna and transmitted to the UHF RFID reader. The UHF RFID reader is connected to a processor 114, which controls the overall operation of the UHF RFID reader and manages the data provided by the UHF RFID reader. The processor also manages the communication with a central remote system 115 managing the inventory and controls a WIFI module 116, which allows for wireless communication. The communication between the UHF RFID system and the central remote system is performed via a communication channel 117, which can be for example a wired local network or a WIFI channel. A battery 118 powers the processor, the WIFI module and the RFID reader, and therefore allows for an autonomous operation of the UHF RFID system without necessity for connecting to an electrical supply. Preferably, the battery, the processor, the WIFI module and the RFID reader are included in the regular octagonal cylinder. The regular octagonal cylinder, as well as the UHF RFID system, can be quite compact as the UHF antennas can be as small as 8 centimeters by 8 centimeters.

A vertical axle 120 connects the regular octagonal cylinder with an electrical motor 122. A first end of the vertical axis is fixedly bound to a center 124 of a first common edge 126 of two contiguous side faces of the regular octagonal cylinder. The electrical motor connected to a second end 127 of the vertical axle can drive a rotation of the regular octagonal cylinder. The bound of the first end of the vertical axle to the common edge orientates the regular octagonal cylinder vertically so that, driven by the electrical motor, the regular octagonal cylinder rotates around an axis of rotation 128. The axis of symmetry rotation is vertical and is a symmetrical axis for the regular octagonal cylinder where the axis of rotation joins the center of the common edge with a symmetrical point of the regular octagonal cylinder, which is a center of a second common edge of two contiguous side faces of the regular octagonal cylinder - second common edge, which is symmetrical of the first common edge for the regular octagonal cylinder. The four UHF antennas are attached on the four side faces of the regular octagonal cylinder, which are on a same side of the axis of rotation. Emission directions of main lobes of radiation for the four UHF antennas are distributed every 45 degrees and are pointing within a same half plane limited by the axis of rotation. A main lobe of radiation for each of the UHF antennas should be wide enough so that they overlap and fully cover the half plane, which they are pointing to. Preferably, the emission angle for each of the UHF antennas is 60 degrees allowing for a substantial overlap for the emissions of the UHF antennas.

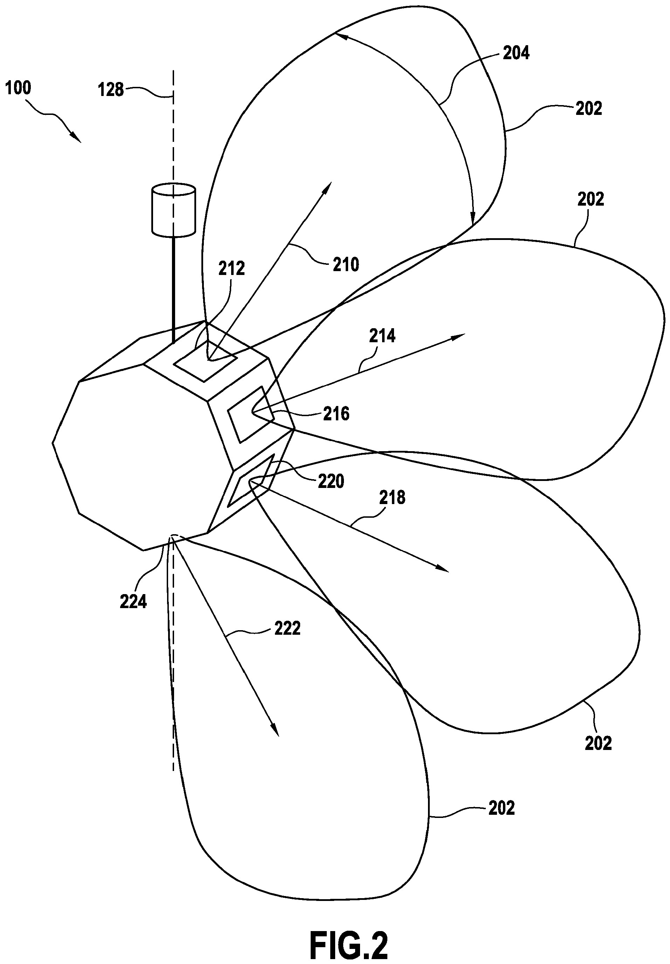

Figure 2 illustrates the coverage by the four UHF antennas of the half plane limited by the axis of rotation 128. The spatial intensity repartition of the radiation generated by each UHF antenna is represented by a lobe of radiation 202 with an emission angle 204. A usable part of an lobe of radiation for a typical UHF antenna (for example a UHF antenna MTI Wireless Edge MT - 242068/SLH 2.5DBIC LHCP) energized by a typical 11 watts UHF RFID reader with a 2 watts emission power (for example a UHF reader INPINJ Speedway R420) extends up to 5 to 6 meters with an emission angle of 60 degrees. Beyond these 5 to 6 meters, the UHF emission intensity begins to be too low for energizing a passive RFID tag as the UHF signal decreases with the inverse of the square of the distance. Generally, the main active component of each UHF antenna is a planar sheet of metal, also called a patch, preferably with a rectangular or square shape, which constitutes a UHF antenna plane. Once fully packaged, a UHF antenna is a flat object radiating in an emission direction perpendicular the largest exterior surface of the UHF antenna. When exited by the UHF RFID reader, the patch radiates with an emission direction, which is perpendicular to the UHF antenna plane. The emission direction corresponds to an emission half axis with an origin in the center of the UHF antenna (or of the patch), and which is perpendicular to the UHF antenna plane. A first emission half axis 210 of a first UHF antenna 212 makes an angle of 22.5 degrees with the axis of rotation. A second emission half axis 214 of a second UHF antenna 216 makes an angle of 67.5 degrees with the axis of rotation. A third emission half axis 218 of a third UHF antenna 220 makes an angle of 112.5 degrees with the axis of rotation. A fourth emission half axis 222 of a fourth UHF antenna 224 makes an angle of 157.5 degrees with the axis of rotation. When the electrical motor rotates the regular octagonal cylinder around the vertical axis of rotation, the space around the UHF RFID system is scanned in all directions by the UHF emissions from the four UHF antennas. The regular octagonal cylinder height is limited so as to minimize its weight and volume in order to facilitate for its smooth rotation. Advantageously, the UHF RFID reader is configured for operating the UHF antennas in a multiplexed architecture. In such an optimized configuration, each antenna is energized successively and can benefit from the full power of the UHF RFID reader.

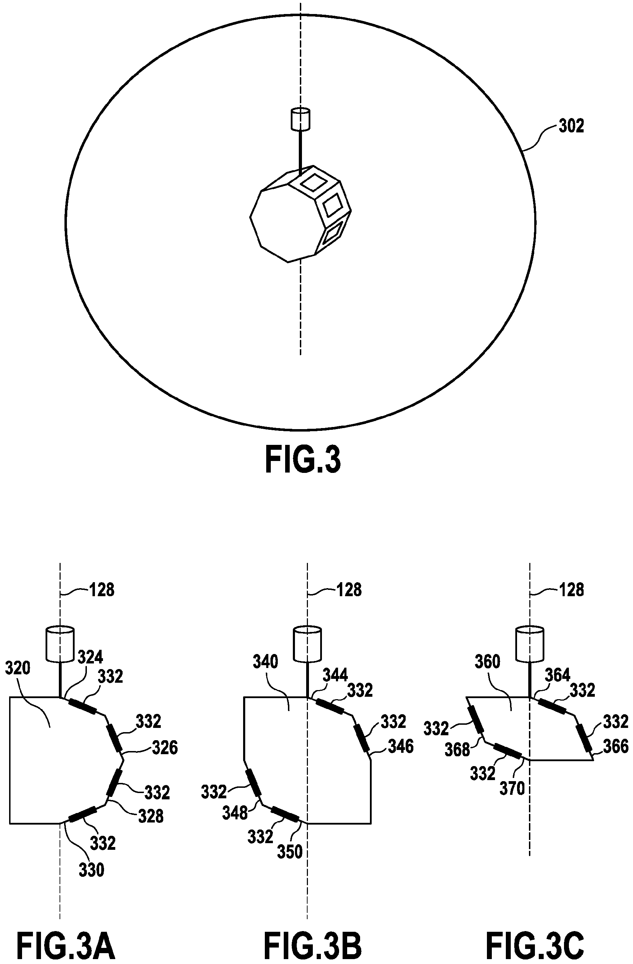

Figure 3 illustrates the volume 302, which is scanned by the UHF RFID system, and corresponding to a spherical volume centered on the regular octagonal cylinder. Preferably, the regular octagonal cylinder is rotated by steps using for example a stepper motor, so that a stationary waves regime can be established each time the motor and the rotation stops. The motor rotating the UHF antennas is controlled by the processor, whose commands can be transmitted via the WIFI module. A benefit of the stationary waves regime is that, on one hand, it provides a pattern of intensity peaks, which are favorable for reading RFID tags. On the other hand, the associated and complementary pattern of nodes is unfavorable for reading RFID tags. However, as the UHF antennas rotate with the regular octagonal cylinder, the pattern of intensity peaks shifts, so that any RFID tag within the volume 302 is reached by an intensity peak. Therefore, the UHF RFID system of the invention, by rotating a set of UHF antennas, solves the issue of the nodes of the stationary waves regime and takes full advantages of the intensity peaks of the stationary waves regime. The rotation of the set of UHF antennas also allows for scanning a large space around the UHF RFID system without having to multiply the number of UHF antennas and/or UHF RFID systems - multiplication, which would be required with fixed UHF antennas. Additionally, the constant change of emission directions and of reflection significantly lowers the risk of masking as the pattern of intensity peaks constantly changes. Preferably, the structure of the regular octagonal cylinder, and at least its external surfaces, are metallic so as to participate in the reflections of the UHF EM waves and in the construction of the changing pattern of intensity peaks.

In another embodiment of the invention, the processor, the WIFI module and the RFID reader can be located with the electrical motor, and wired and powered with an electrical supply and no battery is required, and eventually no WIFI module is required if wired communication is installed. It is easily devised by those ordinary skilled in the art that different allocations of the battery, the processor, the WIFI module and the RFID reader either within the regular octagonal cylinder or near the electrical motor are also possible.

In a particular embodiment, the scan by the UHF RFID system may be limited to a determined zone. Based on the determined zone, the angle of rotation of the electrical motor can be limited by the controller and the UHF antennas energized by the UHF RFID reader can be selected by the controller so that the scanning by the UHF RFID system is limited to the determined zone. Such limitation to a determined zone can be used for example for preventing from a UHF scanning through a ceiling and eventually erroneously reading RFID tags located outside the closed volume to be monitored.

The above UHF RFID system based on 4 UHF antennas can be generalized to any UHF RFID system based on N UHF antennas attached in the center of each surface of N contiguous side faces of a regular polygonal cylinder with 2.N side faces. A UHF RFID reader can operate the N UHF antennas via N antenna ports. A benefit of increasing the number UHF antennas is that for each UHF antenna the emission angle of their lobe of radiation can be lowered, therefore increasing the intensity of the lobe of radiation. For example, by increasing the number of antennas from four to eight, the emission angle can be lowered from 60 degrees to 30 degrees, and the UHF emission intensity can be multiplied by four.

A support of the four UHF antennas, as illustrated on figure 1, can also be constituted of only parts of the regular octagonal cylinder including only four side faces rather than the eight side faces of the regular octagonal cylinder. Figure 3A illustrates a first octagonal type support 320 with only half of the regular octagonal cylinder with four contiguous side faces 324, 326, 328 and 330 corresponding to the four contiguous side faces 106a, 106b, 106c and 106d of the regular octagonal cylinder illustrated on figure 3, and where each of the four contiguous side faces 324, 326, 328 and 330 holds a UHF antenna 332 similar to the UHF antenna 108. The remaining half of the regular octagonal cylinder stands on one side of the axis of rotation 128. On the other side of the axis of rotation, the other part of the support can be constituted of any volume appropriate for the construction of the UHF RFID system, for example a rectangular parallelepiped as illustrated on figure 3A, but, preferably, this volume is designed so that the resulting moment of inertia of the support and its content with respect to the axis of rotation is situated on the axis of rotation in order to facilitate for a smooth rotation of the support and its content. Figure 3B illustrates a second octagonal type support 340 including four side faces 344, 346, 348 and 350 where each of the four contiguous side faces 344, 346, 348 and 350 holds a UHF antenna 332. The two contiguous side faces 344 and 346 correspond to the two contiguous side faces 324 and 326 of the first octagonal type support illustrated on figure 3A. The two contiguous side faces 348 and 350 correspond to the two contiguous side faces 328 and 330 of the first octagonal type support illustrated on figure 3A, but repositioned on the second octagonal type support by symmetry with respect to the axis of rotation 128. Figure 3C illustrates a third octagonal type support 360 including four side faces 364, 366, 368 and 370 where each of the four contiguous side faces 364, 366, 368 and 370 holds a UHF antenna 332. The two contiguous side faces 364 and 366 correspond to the two contiguous side faces 344 and 346 of the second octagonal type support illustrated on figure 3B. The two contiguous side faces 368 and 370 correspond to the two contiguous side faces 348 and 350 of the second octagonal type support illustrated on figure 3B, but repositioned on the third octagonal type support by a translation parallel to the axis of rotation 128 so as to minimize the volume of the third octagonal type support.

More generally, an optimized support for the four UHF antennas can be designed with four side faces, where each of the four side faces holds one of the four UHF antennas 332, and where the four side faces of the optimized support have the same angular orientation as the side faces 106a, 106b, 106c and 106d of the regular octagonal cylinder illustrated on figure 3. The four side faces of the optimized support can be distributed anywhere on the surface of the optimized support as long as their respective angular orientation with respect to the axis of rotation 128 is the same as the respective angular orientation of the side faces 106a, 106b, 106c and 106d with respect to the axis of rotation 128. Preferably, the optimized support is designed so that the moment of inertia of the optimized support and its content with respect to the axis of rotation is situated on the axis of rotation in order to facilitate for a smooth rotation of the support and its content.

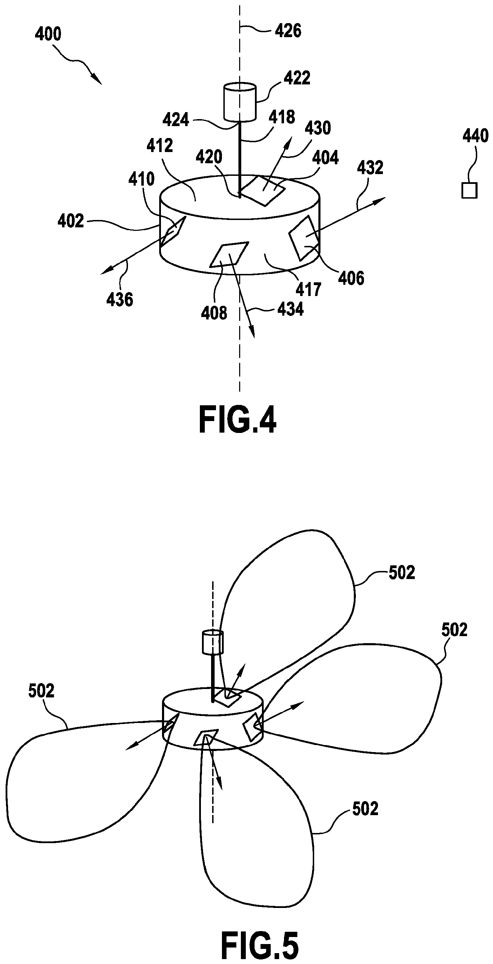

Figure 4 illustrates another embodiment of the invention in the form of a more compact second UHF RFID system 400 embodying an optimized support as introduced above. The second UHF RFID system comprises a circular support 402 in the form of a circular cylinder holding four UHF antennas 404, 406, 408 and 410 and comprising of an external top circular surface 412 and an external bottom circular surface 416 and an external cylindrical surface 417 joining the external top circular surface and the external bottom circular surface. A vertical axle 418 connects a center 420 of the external top circular surface of the circular cylinder with an electrical motor 422. The vertical axle is oriented perpendicularly to the external top circular surface of the circular cylinder. The electrical motor connected to a second end 424 of the vertical axle can drive a rotation of the circular cylinder around an axis of rotation 426 for the circular cylinder where the axis of rotation is aligned with the vertical axle and goes through the center of the external top circular surface of the circular cylinder and a center of the external bottom circular surface of the circular cylinder. The four UHF antennas are attached on the external surfaces of the circular cylinder. Emission directions of the four UHF antennas are distributed every 45 degrees. The first UHF antenna 404 is attached onto the external top circular surface of the circular cylinder, preferably in the center of the external top circular surface, and a first emission half axis 430 of the first UHF antenna makes an angle of 22.5 degrees with the axis of rotation. The second UHF antenna 406 is attached onto the external cylindrical surface of the circular cylinder, preferably centered onto a horizontal median plane of the circular cylinder, and a second emission half axis 432 of the second UHF antenna makes an angle of 67.5 degrees with the axis of rotation. The third UHF antenna 408 is attached onto the external bottom circular surface of the circular cylinder, preferably in the center of the external bottom circular surface, and a third emission half axis 434 of the third UHF antenna makes an angle of 157.5 degrees with the axis of rotation. The fourth UHF antenna 410 is attached onto the external cylindrical surface of the circular cylinder, preferably in a symmetrical position of the second UHF antenna in respect to the axis of rotation on the horizontal median plane of the circular cylinder, and a fourth emission half axis 436 of the fourth UHF antenna makes an angle of 112.5 degrees with the axis of rotation. When the electrical motor rotates the circular cylinder around the vertical axis of rotation, the space around the second UHF RFID system is scanned in all directions by UHF emissions from the four UHF antennas. The height of the circular cylinder is limited so as to minimize its weight and volume in order to facilitate for its smooth rotation. The circular cylinder, as well as the second UHF RFID system, can be very compact as the UHF antennas can be as small as 8 centimeters by 8 centimeters.

For monitoring a closed volume and receiving a signal from a passive RFID tag 440 located within the closed volume, the second UHF RFID system has a similar UHF RFID architecture to the one of the UHF RFID system illustrated on figure 1. Each UHF RFID antenna is electrically connected to a single UHF RFID reader. Conveniently, the UHF RFID reader operates with four antenna ports and can operate the four UHF antennas. The signal received by a UHF RFID antenna from a passive RFID tag is transferred to and processed by the UHF RFID reader. The UHF RFID reader is connected to a processor, which controls the overall operation of the UHF RFID reader and manages the data provided by the UHF RFID reader. The processor also manages the communication with a central remote system managing the inventory and can control a WIFI module. A battery can power the processor, the WIFI module and the RFID reader allowing for an autonomous operation of the second UHF RFID system. Preferably, the battery, the processor, the WIFI module and the RFID reader are included in the circular cylinder. Advantageously, the UHF RFID reader is configured for operating the UHF antennas in a multiplexed architecture.

Figure 5 illustrates the coverage by the four UHF antennas attached onto the circular cylinder. The spatial intensity repartition of the radiation generated by each UHF antenna is represented by a lobe of radiation 502. The usable part of a lobe of radiation for a typical UHF antenna energized by a typical 11 watts UHF RFID reader with a 2 watts emission power extends up to 5 to 6 meters. When the electrical motor rotates the circular cylinder around the vertical axis of rotation 426, the UHF emissions from the four UHF antennas of the second UHF RFID system scan a spherical volume centered on the circular cylinder - a spherical volume similar to the scanned spherical volume by the UHF RFID system as illustrated on figure 3. Preferably, the circular cylinder is rotated by steps using for example a stepper motor, so that a stationary waves regime can be established each time the motor and the rotation stops. As the UHF antennas rotate with the circular cylinder, the pattern of intensity peaks of the stationary waves shifts, so that any RFID tag within the spherical volume centered on the circular cylinder can be reached by an intensity peak.

As for the UHF RFID system illustrated on figure 1, the processor, the WIFI module and the RFID reader can be located with the electrical motor, and wired and powered with an electrical supply and no battery is required, and eventually no WIFI module if wired communication is installed. It is easily devised by those ordinary skilled in the art that different allocations of the battery, the processor, the WIFI module and the RFID reader either within the circular cylinder or near the electrical motor are also possible.

In a particular embodiment, the scan by the second UHF RFID system may be limited to a determined zone. Based on the determined zone, the angle of rotation of the electrical motor can be limited by the controller and the UHF antennas energized by the UHF RFID reader can be selected by the controller so that the scanning by the second UHF RFID system is limited to the determined zone.

The above second UHF RFID system based on four UHF antennas can also be generalized to any UHF RFID system based on N UHF antennas attached on the circular cylinder. For example, by increasing the number of antennas from four to eight, the emission directions of the eight UHF antennas are distributed every 22.5 degrees, and the UHF emission intensity can be multiplied by four.

More generally, an optimized support for N UHF antennas rotating around a vertical axis of rotation can be designed with N side faces, where each of the N side faces holds one of the N UHF antennas. The UHF antenna of each UHF antenna has an emission direction, which is perpendicular the UHF antenna plane - i.e. perpendicular to a largest exterior surface of the UHF antenna. For optimizing the procurement and the production for the optimized support, all the UHF antennas attached onto the optimized support are preferably the same. Each UHF antenna, which can be identified as antenna k with k having a value from 0 to N-1, has an emission direction orientated at an angle of 90/N+k.180/N degrees with respect to the axis of rotation. The N side faces of the optimized support can be distributed anywhere on a surface of the optimized support as long as they comply with the above angular orientation with respect to the axis of rotation 128. All the UHF antennas of the optimized support have a same emission angle equal to or above 180/N degrees so that the emission lobes of the N UHF antennas overlap and allow for a full scanning coverage of the space around the UHF RFID system. Preferably, the optimized support is designed so that the moment of inertia of the optimized support and its content with respect to the axis of rotation is situated on the axis of rotation in order to facilitate for a smooth rotation of the support and its content.

In a more general embodiment of the invention, the N UHF antennas may have different emission angles and the sum of the emission angles of the N UHF antennas is equal to or above 180 degrees, therefore ensuring for an overlap of emissions of the N UHF antennas. It is easily devised by those ordinary skilled in the art that the orientation of each of the N UHF antennas is adjusted relatively to the orientation of the other UHF antennas and with respect to the axis of rotation so that the resulting emission directions of the UHF antennas allows for the set of N UHF antennas to provide a full scanning coverage of the space around the UHF RFID system. In a particular embodiment, the support of the UHF antennas is a sphere configured with side faces, on which the UHF antennas can be attached. Each side face has a surface shape identical to or larger than a surface shape of each corresponding UHF antenna so that each UHF antenna can be securely attached to the sphere. More generally, the UHF antennas can be included within the support rather than simply attached onto the exterior surface of the support if the material of the support covering the UHF antennas is transparent to UHF radiation. Such an internal positioning of the UHF antennas within the support can protect the UHF antennas and extend their lifetime.

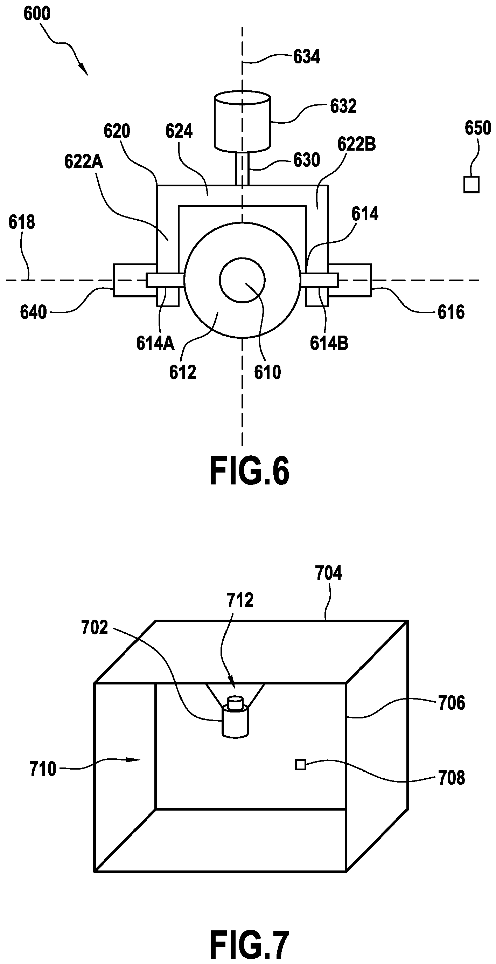

Figure 6 illustrates a preferred embodiment of a preferred UHF RFID system 600 of the invention. A UHF antenna 610 is attached onto a surface of a support 612. The UHF antenna is a flat object radiating in an emission direction, which is perpendicular to the largest exterior surface of the UHF antenna. The support is held by a horizontal axle 614, which can cross the support or can be constituted of two aligned horizontal axles 614A and 614B, which hold the support by two symmetric sides of the support. A first electrical motor 616 connected to a first extremity of the horizontal axle can drive a rotation of the support around a horizontal axis of rotation 618. The horizontal axis of rotation corresponds to the longitudinal axis of symmetry of the horizontal axle. Advantageously, the horizontal axis of rotation is also an axis of symmetry of the support in order to facilitate for a smooth rotation of the support around the horizontal axis of rotation. The horizontal axle and the first electrical motor are held by a mechanical fork 620 comprising two vertical arms 622A and 622B on each side of a horizontal beam 624, which supports and holds the two vertical arms together. The mechanical fork allows for the support to rotate between two vertical arms of the mechanical fork. Each end of the horizontal axis is maintained by a bearing localized near the extremity of each vertical arm of the mechanical fork.

A vertical axle 630 connects the mechanical fork with a second electrical motor 632. The vertical axle is oriented perpendicularly to the horizontal beam of the mechanical fork. The second electrical motor drives a rotation of the mechanical fork around a vertical axis of rotation 634. The vertical axis of rotation is aligned with the vertical axle and is a symmetry axis for the vertical axle. Advantageously, the vertical axle is attached to the horizontal beam in its center so that the vertical axis of rotation is a symmetry axis for the mechanical fork, and the support is attached on the horizontal axle so that the vertical axis of rotation is a symmetry axis for the support. Therefore, the mechanical fork, the vertical and the horizontal axles, and the support are equally positioned around the vertical axis of rotation in order to facilitate for a smooth rotation of the mechanical fork and the support around the vertical axis of rotation. Preferably, a third electrical motor 640, identical to the first electrical motor is connected to a second extremity of the horizontal axle, and participates in driving the rotation of the support around the horizontal axis of rotation. Alternatively, the third electrical motor can be replaced by a mass providing the same moment of inertia as the third electrical motor with respect to the vertical axis of rotation.

When the first electrical motor rotates the support around the horizontal axis of rotation and the second electrical motor is maintained stopped, the UHF antenna can scan the space within a plane perpendicular to the horizontal axis of rotation and going through the center of the UHF antenna. When the second electrical motor rotates the support around the vertical axis of rotation and the first electrical motor is maintained stopped, the UHF antenna can scan the space within a right circular cone having the vertical axis of rotation its axis of revolution and the intersection of the vertical axis of rotation and the emission direction of the UHF antenna as its apex. An aperture of the cone depends on the position where the first electrical motor is stopped, and the aperture of the cone is twice the angle between the vertical axis of rotation and the emission direction of the UHF antenna. In the particular case when the first electrical motor is stopped so that the emission direction of the UHF antenna is perpendicular to the vertical axis of rotation (as illustrated on figure 6), the UHF antenna can scan the space within a horizontal plane perpendicular to the vertical axis of rotation and going through the center of the UHF antenna. As both the first and the second electrical motors rotate, all the space around the preferred UHF RFID system can be scanned by UHF emission from the UHF antenna.

For monitoring a closed volume and receiving a signal from a passive RFID tag 650 located within the closed volume, the preferred UHF RFID system has a similar UHF RFID architecture to the one of the UHF RFID system illustrated on figure 1. The UHF RFID antenna (for example a UHF antenna MTI Wireless Edge MT - 242068/SLH 2.5DBIC LHCP) is electrically connected to a UHF RFID reader (for example a UHF reader INPINJ Speedway R120). The signal received by a UHF RFID antenna from the passive RFID tag is transferred to and processed by the UHF RFID reader. The UHF RFID reader is connected to a processor, which controls the overall operation of the UHF RFID reader and manages the data provided by the UHF RFID reader. The processor also manages the communication with a central remote system managing the inventory and can control a WIFI module. A battery can power the processor, the WIFI module and the RFID reader allowing for an autonomous operation of the preferred UHF RFID system. Preferably, the RFID reader is included in the support, next to the UHF antenna, in order to ensure for an optimized UHF communication between the RFID reader and the UHF antenna. The battery, the processor and the WIFI module can be immobile and located near the second electrical motor, and wired and powered with an electrical supply so that no battery is required. Eventually, no WIFI module is needed if wired communication is installed. The first and the second electrical motors rotating the UHF antenna are controlled by the processor, whose commands can be transmitted via the WIFI module.

The space around the preferred UHF RFID system can be scanned in all directions by rotating the electrical motors and by pointing the emission direction of the UHF antenna in a random manner. Preferably, the scanning is controlled by the processor in an ordered manner. While one of the electrical motor in stopped, the other electrical motor is rotated by steps over 360 degrees, using for example a stepper motor, so that a stationary waves regime can be established each time the motor and the rotation stops. Once the full 360 degrees rotation is completed, the other motor rotates one step, and a 360 degrees rotation and scanning is performed. The process continues until the other motor has performed a 180 degrees rotation allowing for the UHF antenna to scan all the space around the preferred UHF RFID system. Preferably, the structure of the support and the mechanical fork, and at least their external surfaces, are metallic so as to participate in reflections of the UHF EM waves and in the construction of a changing pattern of intensity peaks. The changing of pattern of intensity peaks is all the more efficient as the metallic external surfaces of the support and the mechanical fork are moving.

In a particular embodiment, the scan by the UHF antenna may be limited to a determined zone. Based on the determined zone, the angles of rotation of the first and the second electrical motors can be limited by the controller so that the scanning by the UHF antenna is limited to the determined zone. Such limitation to a determined zone can be used for example for preventing from a UHF scanning through a ceiling and eventually erroneously reading RFID tags located outside the closed volume to be monitored.

The above preferred UHF RFID system based on only one UHF antenna can be generalized to a UHF RFID system based on N UHF antennas attached onto a support, which is spherical. Depending on the number N of UHF antennas and their positions on the spherical support, for scanning all the space around the preferred UHF RFID system, the extent of the rotations of the first and second electrical motors, and therefore the number of rotation steps, can be greatly limited. In such an embodiment, the UHF RFID reader is configured for operating the UHF antennas in a multiplexed architecture, and the duration for scanning the space around the preferred UHF RFID system can be reduced compared with preferred UHF RFID system comprising only one UHF antenna.

Figure 7 illustrates an implementation of a UHF RFID system 702, which can be either a UHF RFID system with a regular polygonal cylinder as illustrated on figure 1, or a UHF RFID system with a circular cylinder as illustrated on figure 4, or the preferred UHF RFID system as illustrated on figure 6. The UHF RFID system is located in a chamber 704, such as a warehouse or a storage container, for the purpose of permanent inventory of items stored within the closed chamber and/or of tracing items located in the closed chamber. The UHF RFID scans a closed volume 706 defined by the chamber and reads any RFID tag 708 attached to an item and located in the closed volume. Preferably, walls, floor and ceiling of the chamber are metallic or covered by a metallic surfaces or eventually comprise a metallic wire mesh so as on one hand to prevent the radiative electromagnetic (EM) field generated by the UHF RFID system from propagating outside the chamber and eventually erroneously reading RFID tags located outside the chamber, and on the other hand to reflect EM waves and to participate in the establishment of the stationary wave regime. The UHF RFID system covers a scanned volume 710 corresponding to the closed volume defined by the chamber, except eventually for a volume 712 masked by the UHF RFID system.

Preferably, the UHF RFID system is attached to the ceiling of the chamber in a central part of the ceiling as illustrated on figure 7, so as to minimize obstructing movements within the chamber. A central position for the UHF RFID system within the chamber is both beneficial for optimizing the UHF signal intensity and for minimizing masking effects within the chamber. As for a typical UHF antenna energized by a typical 11 watts UHF RFID reader with a 2 watts emission power, a usable part of a lobe of radiation extends up to 5 to 6 meters, the surface of a square chamber can be up to 50 square meters. The invention is therefore most appropriate for a small warehouse with a surface of about 50 square meters or smaller, or for storage containers. For a larger warehouse, several of the UHF RFID system described above must be regularly positioned within the warehouse and managed together.

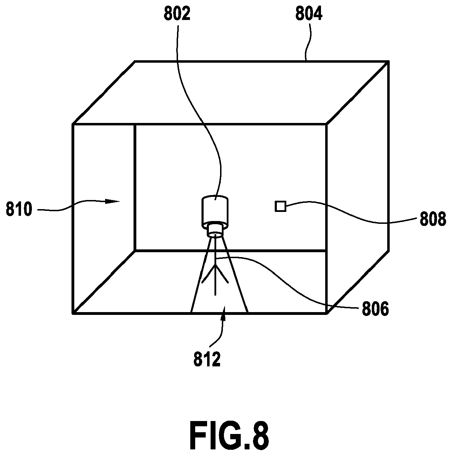

In another embodiment, as illustrated on figure 8, a UHF RFID system 802 of the invention located in a chamber 804 is attached onto a tripod 806 for the purpose of permanent inventory of items 808 stored within the closed chamber and/or of tracing items located in the chamber. This embodiment on a tripod corresponds to mobile usages and/or temporary usages of the UHF RFID system. Preferably, for this tripod version, the UHF RFID system is configured for an autonomous operation with a battery and a WIFI module. The UHF RFID system covers a scanned volume 810 corresponding to an internal closed volume defined by the chamber, except eventually for a volume 812 masked by the UHF RFID system.

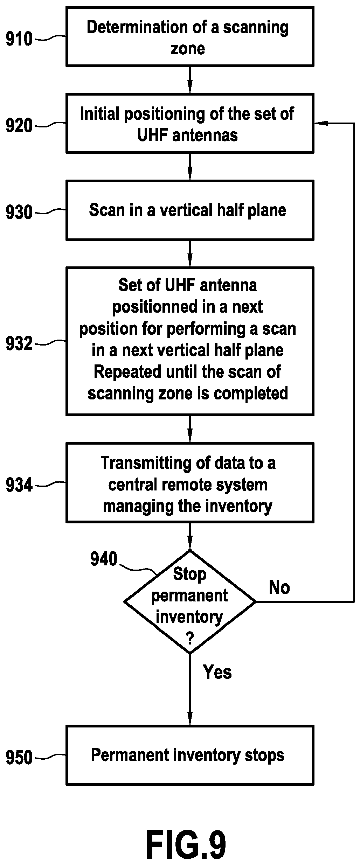

A method using a UHF RFID system according to the invention is now described for performing a permanent inventory in a chamber in reference with figure 9. The method applies to the two types of UHF RFID systems described above: the UHF RFID systems with a single rotation axle, which is a vertical axle, and a set of UHF antennas such as the system comprising a regular octagonal cylinder or the system comprising a circular cylinder, or the UHF RFID systems with two rotation axles, comprising a vertical axle and a horizontal axle, and a set of UHF antennas, which may be limited to only one UHF antenna, such as the preferred UHF RFID system illustrated on figure 6. According to the invention, in order to alleviate for the static nodes of a static stationary waves regime and in order to minimize masking effects, the UHF antennas are moved by rotation. In step 910, a scanning zone is determined. For a single rotation axle system, a range of angles of rotation for the single rotation axle is defined and the UHF antennas energized by the UHF RFID reader are selected. For a two rotation axles system, a first range of horizontal angles of rotation for the vertical axle is defined, and, corresponding to each horizontal angle value within the first range of angles, a range of vertical angles of rotation for the horizontal axle is defined. Having a range of vertical angles dependent on a corresponding horizontal angle allows for defining scanning zones other than rectangular scanning zone. For defining a rectangular scanning zone, only a first range of horizontal angles of rotation for the vertical axle and a second range of vertical angles of rotation for the horizontal axle is required. In step 920, the set of UHF antenna is positioned in an initial position for starting the scanning of the determined scanning zone. For a single rotation axle system, the single rotation axle is rotated into an initial position, and therefore the set of UHF antennas is rotated is this initial position. For a two rotation axles system, the set of UHF antennas is positioned into an initial position by rotating the two rotation axles.

In step 930, a scan is performed in a vertical half plane corresponding to the angle of rotation around the vertical axle. For a single rotation axle system, the vertical scanning is performed by successively energizing the UHF antennas according to the determined scanning zone. Each UHF antenna is energized for a duration sufficient for a stationary waves regime to be established. For a two rotation axles system, the UHF antenna is continuously energized, and the vertical scanning is performed by rotating step by step the horizontal axle, and therefore rotating the UHF antenna, according to the range of vertical angles of rotation defined for the determined scanning zone. For each step, the UHF antenna is maintained immobile for a duration sufficient for a stationary waves regime to be established. In step 932, the set of UHF antenna is positioned in a next position for performing a scan in a next vertical half plane, and the next scan is performed in the next vertical half plane. These actions are repeated until the scan of the determined scanning zone is completed. For a single rotation axle system, the set of UHF antennas is rotated around the single rotation axle to the next position. The vertical scanning is performed by successively energizing the UHF antennas according to the determined scanning zone. Each UHF antenna is energized for a duration sufficient for a stationary waves regime to be established. For a two rotation axles system, the set of UHF antennas is positioned into a next position by rotating the two rotation axles. The UHF antenna is continuously energized, and the vertical scanning is performed by rotating step by step the horizontal axle, and therefore rotating the UHF antenna, according to the range of vertical angles of rotation defined for the determined scanning zone. For each step, the UHF antenna is maintained immobile for a duration sufficient for a stationary waves regime to be established. As part of the scanning, data corresponding to responses from RFID tags located in the chamber are stored by the UHF RFID system.

In step 934, the data are transmitted to a central remote system managing the inventory. The data can also be transmitted continuously during the scan of the determined scanning zone. In a preferred embodiment, the data stored in the UHF RFID system are regularly cleared after having been transmitted to a central remote system. In step 940, eventually after a pre-defined delay, the UHF RFID system checks whether the permanent inventory must stop or must continue. If the permanent inventory must continue, the process returns and continues at step 920. If the permanent inventory must stop, the permanent inventory stops 950.

Although the invention has been described with respect to preferred embodiments thereof, it will be understood by those skilled in the art that the foregoing and various other changes, omissions and deviations in the form and detail thereof may be made without departing from the scope of this invention. In particular, an application of the invention is clearly not limited to permanent inventories in warehouses or storage containers.

## Claims

1. A UHF RFID system used in a closed volume (706, 804) comprising: a UHF antenna set (108; 404, 406, 408, 410; 610) including at least one flat UHF antenna (108, 404, 406, 408, 410, 610), a support (102, 402, 612) for the UHF antenna set, and a first axle (120, 418, 614) holding the support, **characterized in that** the UHF antenna set is configured to rotate around a first axis (128, 426, 618) forming an axis of symmetry for the first axle and driven by a first electrical motor (122, 422), wherein the UHF RFID system is configured for the UHF antenna set to provide a tridimensional scanning coverage around the UHF RFID system and to generate a shifting pattern of UHF intensity peaks within the closed volume.

2. The UHF RFID system according to claim 1, **characterized in that** the UHF antenna set is constituted of N flat UHF antennas (108, 404, 406, 408, 410) radiating in N emission directions (430, 432, 434, 436), wherein each flat UHF antenna of the N flat UHF antennas is configured to radiate in an emission direction of the N emission, wherein the emission direction is perpendicular to a largest exterior surface of the each flat UHF antenna and the emission direction is orientated at an angle of 90/N+k.180/N degrees with respect to the first axis with k having a value from 0 to N-1, wherein each flat UHF antenna has an emission angle (204) equal of above 180/N degrees, wherein the first axis is vertical, and wherein the support is designed so that a moment of inertia of the support and of a content of the support with respect to the first axis is situated on the first axis.

3. The UHF RFID system according to claim 1 or claim 2, **characterized in that** the support (320, 340, 360) includes sections of a regular octagonal cylinder constituted of four side faces (324, 326, 328, 330; 344, 346, 348, 350; 364, 366, 368, 370), and the UHF antenna set is constituted of four UHF antennas (332) wherein a UHF antenna is attached in a center of a side face and two UHF antennas of the four UHF antennas are attached onto two contiguous side faces.

4. The UHF RFID system according to claim 1 or claim 2, **characterized in that** the support (402) holding the UHF antenna set constituted of four UHF antennas (404, 406, 408, 410) comprises a top circular surface (412), a bottom circular surface (416) and an external cylindrical surface (417) joining the top circular surface and the bottom circular surface, wherein the first axle (418) oriented perpendicularly to the top circular surface is configured to connect a center (420) of the top circular surface with the first electrical motor (422), wherein a first UHF antenna (404) of the UHF antenna set is attached onto the external top circular surface, a second UHF antenna (406) of the UHF antenna set is attached onto the external cylindrical surface, a third UHF antenna (408) is attached onto the external bottom circular surface, and a fourth UHF antenna (410) is attached onto the external cylindrical surface, and wherein the emission angle of the UHF antennas is 60 degrees.

5. The UHF RFID system according to claim 1, **characterized in that** the first axle (614) and the first electrical motor (616, 640) are held by a fork (620) comprising a horizontal beam (624) and two vertical arms (622A, 622B) on each side of the horizontal beam holding the two vertical arms, and a vertical axle (630) connecting the fork with a second electrical motor (632), wherein the vertical axle is perpendicular to the horizontal beam, wherein the first axle is an horizontal axle crossing the support or consists in two aligned horizontal axles (614A, 614B) holding the support by two symmetric sides of the support, wherein the second electrical motor is configured for rotating the fork around a second axis (634) forming a symmetry axis for the vertical axle, wherein the vertical axle is attached to a center of the horizontal beam and the UHF RFID system is configured for the second axis to be a symmetry axis for the fork and a symmetry axis for the support, wherein the UHF antenna set is a single UHF antenna or is constituted of N flat UHF antennas supported by a sphere and radiating in N emission directions and comprising at least two UHF antennas.

6. The UHF RFID system according to any one of claims 1 to 5, **characterized in that** the UHF RFID antenna is electrically connected to a UHF RFID reader (110), wherein the UHF RFID reader is connected to a processor (114) controlling the UHF RFID reader and managing data provided by the UHF RFID reader and communicated with an external system (115), wherein a battery (118) is configured to power the processor and the RFID reader, wherein the processor is configured to control at least the first electrical motor and the step-by-step rotation of the support, and wherein the UHF RFID system is configured for limiting rotations of at least the first electrical motor and for selecting the UHF antennas energized by the UHF RFID reader so that the scanning is limited to a determined scanning zone.

7. The UHF RFID system of claim 6, wherein the RFID reader is included in the support.

8. The UHF RFID system of claim 6, wherein the battery, the processor and the RFID reader are included in the support.

9. The UHF RFID system according to any one of claims 1 to 8, **characterized in that** walls, floor and ceiling of the closed volume are metallic or covered by a metallic surfaces or comprise a metallic wire mesh.

10. The UHF RFID system according to any one of claims 1 to 8, **characterized in that** the UHF RFID system is attached to a ceiling of the closed volume in a central part of the ceiling or is attached onto a tripod (804) located on a floor of the closed volume.

11. The UHF RFID system according to any one of claims 1 to 10, **characterized in that** the UHF antenna set is attached onto an exterior surface of the support.

12. The UHF RFID system according to any one of claims 1 to 11, **characterized in that** the UHF antenna set is included within the support, which is transparent to UHF radiation.

13. A method for performing a permanent inventory using the UHF RFID system of claim 1, the method comprising:
- determining a scanning zone (910) in a closed volume (706, 804),
- moving a set of UHF antenna to a position for performing a scan in a vertical half plane (920, 932),
- performing a scan in the vertical half plane (930, 932),
- storing in the UHF RFID system data (934) corresponding to responses from RFID tags located in the closed volume (932),
- transmitting the data to an external system (115),
- clearing the data stored in the UHF RFID system after transmission to the external system, and
- checking, after a pre-defined delay, whether the permanent inventory must stop or must continue (940).

14. The method according to claim 13, wherein the scanning zone is determined by defining a range of angles of rotation for a first axle and by selecting UHF antennas to be energized by the UHF RFID reader, wherein the set of UHF antenna is moved to the position by rotating the first axle, and wherein the scan is performed by successively energizing the UHF antennas according to the determined scanning zone.

15. The method according to claim 13, wherein the scanning zone is determined by defining a first range of horizontal angles of rotation for a vertical axle, and, corresponding to each horizontal angle value within the first range of angles, defining a range of vertical angles of rotation for the first axle, wherein the set of UHF antenna is moved to the position by rotating the first axle and the vertical axle, and wherein the scan is performed by continuously energizing the UHF antenna and by rotating step by step the first axle according to the defined range of vertical angles of rotation, and by maintaining immobile the UHF antenna, for each step, for a duration sufficient for a stationary waves regime to be established.
